# EUROPÄISCHE PATENTANMELDUNG

(11) **EP 0 924 946 A1**
(43) Veröffentlichungstag der Anmeldung: **23.06.1999**
(21) Anmeldenummer: 98123380.2
(22) Anmeldetag: 08.12.1998
(51) Int. Cl.: H04Q 7/22

(54) **Telekommunikationssystem und Verfahren zum Austausch von Informationen zwischen einem E-Mail-Service und einem Teilnehmer in einem Telekommunikationsnetz**

(30) Priorität: 19.12.1997 DE 19756852
(71) Anmelder: SIEMENS AKTIENGESELLSCHAFT, 80333 München (DE)
(72) Erfinder: Landgraf, Rainer, 86807 Buchloe (DE); Reich, Manfred, 85244 Grossinzemoos (DE)

(57) **Zusammenfassung**

Bei einem Verfahren zur Übermittlung von Informationen aus für einen Teilnehmer eines Telekommunikationsnetzes (TKN) bestimmten, in einem E-Mail-Service (EMS) abgelegten E-Mails, werden nach Aktivierung eines entsprechenden Dienstes bei dem E-Mail-Service für den Teilnehmer einlangende E-Mail-Nachrichten zumindest zu Teilen in Sprache umgewandelt, an einen Voice-Mail-Service (VMS) weitergeleitet und dort als gesprochene Nachricht bereitgestellt. Bei einem geeigneten Telekommunikationssystem ist ein E-Mail/Voice-Mail Konverter (KON) vorgesehen, der zur zumindest teilweisen Umwandlung von E-Mail-Nachrichten in Sprache und/oder von Sprache in digitale Schriftform eingerichtet ist, wobei für die Ansteuerung des Konverters durch Befehlsnachrichten eines Teilnehmers (TEN) eine Steuerlogik (STL) vorgesehen ist.

## Beschreibung

Die Erfindung bezieht sich auf ein Verfahren zur Übermittlung von Informationen aus für einen Teilnehmer eines Telekommunikationsnetzes bestimmten, in einem E-Mail-Service abgelegten E-Mails, weiters auf ein Verfahren zur Übermittlung von Nachrichten oder Informationen eines Teilnehmers eines Telekommunikationsnetzes an einen E-Mail-Service und letztlich auf ein Telekommunikationssystem, mit zumindest einem Netz, insbesondere Mobilfunknetz mit einem E-Mail-Service für den Empfang und die Bereitstellung von E-Mail-Nachrichten und mit einem Voice-Mail-Service für den Empfang und die Bereitstellung von Voice-Mail-Nachrichten.

E-Mail-Dienste, im folgenden als E-Mail-Service bezeichnet, sind bekannt und stehen in vielen Netzen zur Verfügung. Ein Teilnehmer des Netzes kann üblicherweise über ein Modem und einen PC auf solche Dienste zugreifen. Der Teilnehmer erhält nach Verbindung mit beispielsweise einem Server die Anzeige, daß E-Mail-Nachrichten für ihn vorliegen. Die Nachricht kann dann abgerufen und am Bildschirm gelesen bzw. ausgedruckt werden.

Oft, beispielsweise auf Reisen, steht einem Netzteilnehmer lediglich ein Mobilfunkgerät für Sprachdienste zur Verfügung, sodaß für den Teilnehmer in einem E-Mail-Service bereitgestellte E-Mail-Nachrichten nicht abgefragt bzw. ausgelesen werden können. Bei den heute üblichen Kommunikationsnetzen, insbesondere bei Mobilfunknetzen, steht dem Teilnehmer regelmäßig ein Voice-Mail-Service, meist Mailbox genannt, zur Verfügung, in welcher gesprochene Nachrichten anderer Teilnehmer abgelegt sind.

Beschränkt können bei den in Mobilfunknetzen eingerichteten SMS-Diensten (= "Short Message Service") Nachrichten auch dann, wenn kein PC-Terminal zur Verfügung steht, in alphanumerischer Form an den Teilnehmer weitergegeben werden. Die Beschränkung liegt einerseits in der dienstspezifischen Beschränkung auf z.B. 160 Zeichen und andererseits an der Größe der üblichen Displays an Mobilfunkgeräten.

Eine Aufgabe der Erfindung liegt darin, einem Teilnehmer auch dann Zugriff auf E-Mail-Nachrichten zu ermöglichen, wenn deren Ausgabe oder Anzeige in Schriftform ständig oder vorübergehend nicht möglich ist.

Diese Aufgabe wird erfindungsgemäß bei einem Verfahren zur Übermittlung von Informationen aus für einen Teilnehmer eines Telekommunikationsnetzes bestimmten, in einem E-Mail-Service abgelegten E-Mails dadurch gelöst, daß nach Aktivierung eines entsprechenden Dienstes bei dem E-Mail-Service für den Teilnehmer einlangende E-Mail-Nachrichten zumindest zu Teilen in Sprache umgewandelt, an einen Voice-Mail-Service weitergeleitet und dort als gesprochene Nachricht bereitgestellt werden.

Dank der Erfindung kann ein Teilnehmer, dem kein PC zur Verfügung steht, beispielsweise wenn er sich mit einem Mobiltelefon auf Reisen befindet, dennoch auf E-Mail-Nachrichten zugreifen, auch wenn diese umfangreich sein sollten. Da die E-Mail-Nachrichten in dem Voice-Mail-Service, d.h. in der Mailbox bereitgestellt werden, sieht er bei eingeschaltetem Mobilfunkgerät auf dessen Anzeige, daß Mailbox-Nachrichten vorliegen, sodaß diese dann abgerufen werden können. Über diese Mailbox stehen somit einerseits die üblichen, tatsächlich gesprochenen Nachrichten ferner Teilnehmer zur Verfügung und andererseits in Sprache konvertierte E-Mail-Nachrichten bzw. Teile daraus.

Es ist von Vorteil, wenn der Dienst seitens des Teilnehmers durch Erzeugung und Absendung einer Aktivierungsnachricht und darauffolgende Konfigurierung des E-Mail-Service aktivierbar ist, da hierdurch der Teilnehmer einen wahlfreien Zugang auf einen solchen, üblicherweise gebührenpflichtigen Dienst hat. In diesem Sinne ist es auch zweckmäßig, wenn der Dienst seitens des Teilnehmers durch Erzeugung und Absendung einer Deaktivierungsnachricht deaktiviert wird.

Vorteilhaft ist es auch, wenn seitens des Voice-Mail-Service eine Information an den Teilnehmer gesandt wird, falls Nachrichten vorliegen, die sich durch besondere Anfragen des Teilnehmers erübrigen.

Eine weitere Auswahlmöglichkeit des Teilnehmers und auch eine Vermeidung nicht gewünschter E-Mails läßt sich erreichen, falls der Dienst nur für E-Mails mit vorgegebenen Merkmalen, z. B. der Absenderadresse, aktiviert bzw. deaktiviert wird. Solche Merkmale können vorteilhafterweise seitens des Teilnehmers innerhalb der Aktivierungsnachricht vorgegeben werden.

Eine weitere Aufgabe der Erfindung liegt darin, dem Teilnehmer eine Möglichkeit zu geben, Nachrichten in einen E-Mail-Service einzubringen, obgleich die üblichen, dazu erforderlichen Mittel, insbesondere ein PC, nicht vorhanden sind.

Zur Lösung dieser Aufgabe geht die Erfindung von einem Verfahren zur Übermittlung von Nachrichten oder Informationen eines Teilnehmers eines Telekommunikationsnetzes an ein E-Mail-Service aus, bei welchem erfindungsgemäß nach Aktivieren eines entsprechenden Dienstes seitens des Teilnehmers gesprochene Information nach Spracherkennung in digitale Schriftform umgewandelt, an den E-Mail-Service weitergeleitet und dort als gespeicherte Information bereitgestellt wird.

Auf diese Weise kann der Teilnehmer an andere Teilnehmer, die unter einer bestimmten E-Mail-Adresse erreichbar sind, E-Mail-Nachrichten durch Sprache eingeben, und diese Nachrichten können dann an dem Bestimmungsort, beim fernen Teilnehmer, in Schriftform angezeigt bzw. ausgedruckt werden.

Um dem Teilnehmer größere Wahlfreiheiten zu geben, ist es vorteilhaft, wenn der Dienst seitens des Teilnehmers durch Erzeugung und Absendung einer Aktivierungsnachricht und darauffolgende Konfigurierung des Voice-Mail bzw. E-Mail-Service aktiviert wird. Dabei ist es auch empfehlenswert, wenn der Dienst seitens des Teilnehmers durch Erzeugung und Absendung einer Deaktivierungsnachricht deaktiviert wird, da nicht immer der üblicherweise gebührenpflichtige Dienst benötigt wird.

Die Bequemlichkeit für den Teilnehmer wird erhöht, wenn seitens des E-Mail-Service eine Information an den E-Mail-Adressaten gesandt wird, sobald Nachrichten vorliegen. Auch sollte zur besseren Information des Teilnehmers nach Abfrage des Teilnehmers der aktuelle Status des Dienstes über eine Statusmeldung an den Teilnehmer geleitet werden.

Das Verfahren nach der Erfindung empfiehlt sich besonders, falls das Telekommunikationsnetz ein Mobilfunknetz ist, wenngleich es prinzipiell auch in reinen Festnetzen anwendbar ist.

Die gestellten Aufgaben werden auch mit einem Telekommunikationsnetz, insbesondere Mobilfunknetz, mit einem E-Mail-Service für den Empfang und die Bereitstellung von E-Mail-Nachrichten und mit einem Voice-Mail-Service für den Empfang und die Bereitstellung von Voice-Mail-Nachrichten gelöst, bei welchem gemäß der Erfindung ein E-Mail/Voice-Mail Konverter vorgesehen ist, der zur zumindest teilweisen Umwandlung von E-Mail-Nachrichten in Sprache und/oder von Sprache in digitale Schriftform eingerichtet ist, wobei für die Ansteuerung des Konverters durch Befehlsnachrichten eines Teilnehmers eine Steuerlogik vorgesehen ist.

Die mit einem solchen Telekommunikationsnetz erzielbaren Vorteile wurden bereits zuvor im Zusammenhang mit der Diskussion des Verfahrens erläutert.

Dabei ist es zweckmäßig, wenn der Konverter einen seitens des E-Mail-Service angesteuerten Vocoder besitzt, bzw. falls der Konverter eine Spracherkennungseinheit für seitens eines Teilnehmers oder eines Voice-Mail-Service einlangende Sprache besitzt.

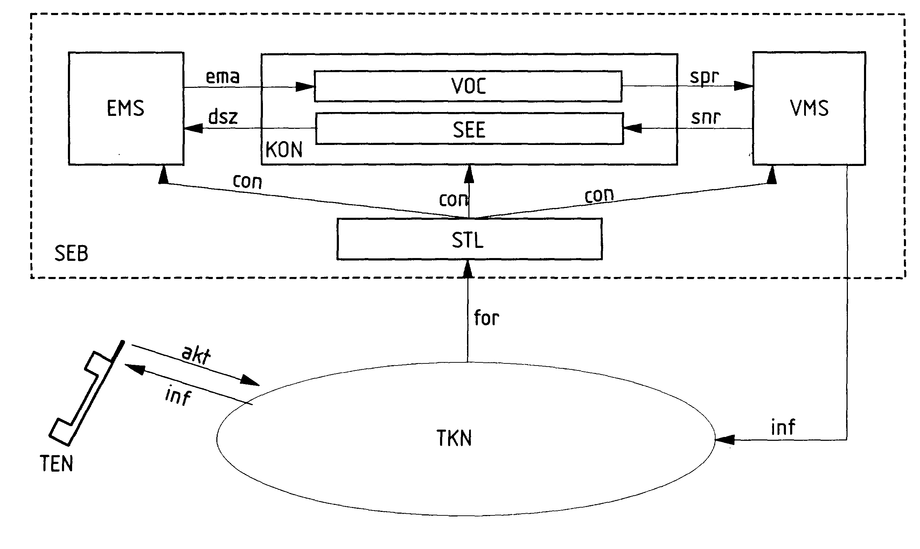

Die Erfindung samt weiterer Vorteile ist im folgenden anhand eines Ausführungsbeispiels näher erläutert und in der Zeichnung veranschaulicht. Diese zeigt in der einzigen Figur ein Telekommunikationszentrum mit einem Mobilfunknetz und einem Servicezentrum.

Im vorliegenden Beispiel sei das Telekommunikationsnetz TKN ein Mobilfunknetz, wie ein GSM-Netz, wenngleich die Erfindung in gleicher Weise auf Festnetze anwendbar ist. Dem Netz TKN ist ein Servicebereich SEB zugeordnet, wobei es für das Wesen der Erfindung ohne Bedeutung ist, ob dieser Servicebereich einen Teil des Netzes bildet oder beispielsweise in einem anderen Netz, etwa einem intelligenten Netz, enthalten ist. Der Servicebereich kann letztlich auch von jemand betrieben werden, der selbst nicht Netzbetreiber ist.

Der Servicebereich SEB enthält einen E-Mail-Service EMS und einen Voice-Mail-Service VMS, wobei letzterer Service oft "Mailbox" genannt wird. Für die Erfindung von Bedeutung ist ein Konverter KON, der einen Vocoder VOC zur Erzeugung von Sprache aus E-Mail-Nachrichten besitzt. Zusätzlich kann der Konverter KON auch eine Spracherkennungseinheit SEE zur Umwandlung von Sprache in digitale Zeichen, bestimmt für den E-Mail-Service EMS, besitzen.

Eine Steuerlogik STL dient zur Steuerung der vorgenannten Einheiten und übernimmt auch die jeweils gewünschte Konfigurierung, beispielsweise entsprechend Aktivierungsnachrichten eines Teilnehmers TEN, der in der Figur als Mobilfunkgerät symbolisiert ist.

Der Teilnehmer TEN kann durch eine entsprechende Eingabe an seinem Mobilfunkgerät, z.B. über einen SMS-Dienst ("Short Message Service") oder einen anderen Dienst eines intelligenten Netzes veranlassen, daß an ihn gerichtete E-Mail-Nachrichten, die in dem E-Mail-Service EMS vorliegen, über den Konverter KON in Sprache umgewandelt und anschließend auf dem Voice-Mail-Center bereitgestellt werden. Wie bei einer üblichen Voice-Mail wird der Teilnehmer mit den bekannten Mitteln des Voice-Mail-Dienstes darüber informiert, daß eine Nachricht vorliegt.

Bei der Umwandlung der E-Mail-Nachrichten in Sprache ist zu beachten, daß lediglich konvertierbare E-Mail-Inhalte die Umwandlung durchlaufen. Nicht konvertierbare Inhalte, beispielsweise kodierte Binärdateien (Zeichnungen, etc.) müssen sicher erkannt werden, und von einer Sprachkonvertierung, die natürlich nicht möglich ist, ausgenommen werden. In einem solchen Fall kann ein Hinweis auf nicht konvertierbare E-Mail-Teile generiert und der konvertierten, in dem Voice-Mail-Service abgelegten Nachricht hinzugefügt werden.

Ein beispielsweiser Ablauf ist folgender: Der Teilnehmer aktiviert den entsprechenden Dienst durch Absenden einer Aktivierungsnachricht akt von dem Mobilfunkgerät an das Mobilfunknetz TKN, und diese Nachricht wird als Weiterleitungssignal FOR an eine Applikation der Steuerlogik STL weitergeleitet, beispielsweise über ein sogenanntes "Short Message Service Center".

Nach Auswertung dieser Nachricht in der Steuerlogik STL werden die erforderlichen Konfigurationsnachrichten CON an den E-Mail-Service EMS, den Konverter KON und den Voice-Mail-Service VMS gesandt.

Nun wird der E-Mail-Service EMS so konfiguriert, daß eingehende, für den Teilnehmer TEN bestimmte E-Mail-Nachrichten automatisch zu dem Konverter KON als E-Mail EMA weitergeleitet werden. Der Konverter KON wandelt die E-Mail-Nachricht in eine gesprochene Nachricht SPR um und leitet sie an den Voice-Mail-Service VMS weiter, in dem sie abgespeichert wird. Weiters wird eine Information inf generiert und über das Mobilfunknetz TKN an den Teilnehmer TEN weitergeleitet, der an dem Display seines Mobilfunkgerätes die Anzeige erhält, daß Voice-Mail-Nachrichten ("Mailbox") für ihn vorliegen. Der Teilnehmer kann nun in bekannter Weise durch Wahl einer Rufnummer, meist einer Kurznummer, den Voice-Mail-Service VMS erreichen und die Information abrufen.

Um sich vor einer Flut von konvertierten E-Mail-Nachrichten zu schützen, kann der Teilnehmer bei Aktivierung des Dienstes vorgeben, daß beispielsweise nur bestimmte E-Mail-Nachrichten konvertiert und in dem Voice-Mail-Service VMS abgelegt werden. Solche Parameter zur Einschränkung des Dienstes können in der Aktivierungsnachricht akt enthalten sein und insbesondere Absenderadressen der E-Mail-Nachrichten betreffen.

Selbstverständlich ist auch vorgesehen, daß der Teilnehmer den Dienst deaktivieren kann, wobei der Ablauf sinngemäß der gleiche ist, wie bei der Dienstaktivierung. Auch hier kann vorgesehen sein, daß die Aktivierung nur eingeschränkt, etwa für einzelne Absenderadressen, erfolgt.

Neben der Anzeige der vorhin genannten Optionen bezüglich einer Einschränkung des Dienstes kann auch der aktuelle Status des Dienstes im Sinne von aktiv/inaktiv dem Teilnehmer TEN übermittelt und an seinem Endgerät angezeigt werden.

In den meisten Fällen bringt die Ablage konvertierter E-Mail-Nachrichten in dem Voice-Mail-Service einen beträchtlichen Gewinn an Bequemlichkeit für Teilnehmer, die - aus welchen Gründen auch immer - keine Möglichkeit haben, E-Mail-Nachrichten in der üblichen Form abzurufen. Es ist jedoch auch möglich, einen weiteren Dienst vorzusehen, der gesprochene Information des Teilnehmers nach Spracherkennung in digitale Schriftform umwandelt, an den E-Mail-Service weiterleitet und dort als gespeicherte Information für Dritte zur Verfügung stellt. Gemäß der Darstellung in der Zeichnung enthält der Konverter KON hierfür eine Spracherkennungseinheit SEE, welcher Sprachnachrichten SNR des Teilnehmers, ggf. wie hier gezeigt über den Voice-Mail-Service VMS zugeführt werden. Die Spracherkennungseinheit SEE wandelt die erhaltene Sprachnachricht SNR in digitale Schriftzeichen DSZ um und leitet diese an den E-Mail-Service EMS, und die Nachricht wird dort als übliche E-Mail-Nachricht abgelegt. Es versteht sich allerdings, daß die Sprachnachricht auch direkt von dem Mobilfunknetz oder Telekommunikationsnetz TKN zu dem Konverter KON bzw. der Spracherkennungseinheit SEE geleitet werden kann.

Schließlich ist nochmals darauf hinzuweisen, daß zwar der E-Mail-Service EMS, der Konverter KON mit dem Vocoder VOC und der Spracherkennungseinheit SEE und der Voice-Mail-Service VMS sowie die Steuerlogik STL eine physikalische Einheit bilden können, dies jedoch keineswegs erforderlich ist. Die Einheiten können auch getrennt voneinander implementiert sein, und jeder Service kann eine eigene Steuerlogik besitzen.

## Patentansprüche

1. Verfahren zur Übermittlung von Informationen aus für einen Teilnehmer eines Telekommunikationsnetzes bestimmten, in einem E-Mail-Service abgelegten E-Mails,
**dadurch gekennzeichnet, daß**
nach Aktivierung eines entsprechenden Dienstes bei dem E-Mail-Service für den Teilnehmer einlangende E-Mail-Nachrichten zumindest zu Teilen in Sprache umgewandelt, an einen Voice-Mail-Service weitergeleitet und dort als gesprochene Nachricht bereitgestellt werden.

2. Verfahren nach Anspruch 1,
**dadurch gekennzeichnet, daß** der Dienst seitens des Teilnehmers durch Erzeugung und Absendung einer Aktivierungsnachricht und darauffolgende Konfigurierung des E-Mail-Service aktiviert wird.

3. Verfahren nach einem der Ansprüche 1 oder 2,
**dadurch gekennzeichnet, daß** der Dienst seitens des Teilnehmers durch Erzeugung und Absendung einer Deaktivierungsnachricht deaktiviert wird.

4. Verfahren nach einem der Ansprüche 1 bis 3,
**dadurch gekennzeichnet, daß** seitens des Voice-Mail-Service eine Information an den Teilnehmer gesandt wird, falls Nachrichten vorliegen.

5. Verfahren nach einem der Ansprüche 1 bis 4,
**dadurch gekennzeichnet, daß** der Dienst nur für E-Mails mit vorgebbaren Merkmalen, z.B. der Absenderadresse, aktiviert bzw. deaktiviert wird.

6. Verfahren nach Anspruch 2 und Anspruch 5,
**dadurch gekennzeichnet, daß** die Merkmale seitens des Teilnehmers innerhalb der Aktivierungsnachricht vorgegeben werden.

7. Verfahren zur Übermittlung von Nachrichten oder Informationen eines Teilnehmers eines Telekommunikationsnetzes an einen E-Mail-Service,
**dadurch gekennzeichnet, daß**
nach Aktivieren eines entsprechenden Dienstes seitens des Teilnehmers gesprochene Information nach Spracherkennung in digitale Schriftform umgewandelt, an den E-Mail-Service weitergeleitet und dort als gespeicherte Information bereitgestellt wird.

8. Verfahren nach Anspruch 7,
**dadurch gekennzeichnet, daß** der Dienst seitens des Teilnehmers durch Erzeugung und Absendung einer Aktivierungsnachricht und darauffolgende Konfigurierung des Voice-Mail- bzw. E-Mail-Service aktiviert wird.

9. Verfahren nach Anspruch 7 oder 8,
**dadurch gekennzeichnet, daß** der Dienst seitens des Teilnehmers durch Erzeugung und Absendung einer Deaktivierungsnachricht deaktiviert wird.

10. Verfahren nach einem der Ansprüche 7 bis 9,
**dadurch gekennzeichnet, daß** seitens des E-Mail-Service eine Information an den E-Mail-Adressaten gesandt wird, sobald Nachrichten vorliegen.

11. Verfahren nach einem der Ansprüche 1 bis 10,
**dadurch gekennzeichnet, daß** nach Abfrage des Teilnehmers der aktuelle Status des Dienstes über eine Statusmeldung an den Teilnehmer geleitet wird.

12. Verfahren nach einem der Ansprüche 1 bis 11,
**dadurch gekennzeichnet, daß** das Telekommunikationsnetz ein Mobilfunknetz ist.

13. Telekommunikationssystem, mit zumindest einem Netz (TKN), insbesondere Mobilfunknetz mit einem E-Mail-Service (EMS) für den Empfang und die Bereitstellung von E-Mail-Nachrichten und mit einem Voice-Mail-Service (VMS) für den Empfang und die Bereitstellung von Voice-Mail-Nachrichten,
**dadurch gekennzeichnet, daß**
ein E-Mail/Voice-Mail Konverter (KON) vorgesehen ist, der zur zumindest teilweisen Umwandlung von E-Mail-Nachrichten in Sprache und/oder von Sprache in digitale Schriftform eingerichtet ist, wobei für die Ansteuerung des Konverters durch Befehlsnachrichten eines Teilnehmers (TEN) eine Steuerlogik (STL) vorgesehen ist.

14. Telekommunikationssystem nach Anspruch 13,
**dadurch gekennzeichnet, daß** der Konverter (KON) einen seitens des E-Mail-Service (EMS) angesteuerten Vocoder (VOC) besitzt.

15. Telekommunikationssystem nach Anspruch 13 oder 14,
**dadurch gekennzeichnet, daß** der Konverter (KON) eine Spracherkennungseinheit (SEE) für seitens eines Teilnehmers (TEN) oder eines Voice-Mail-Service (VMS) einlangende Sprache besitzt.

16. Telekommunikationssystem nach einem der Ansprüche 13 bis 15,
**dadurch gekennzeichnet, daß** ein Servicebereich (SEB) dem Telekommunikationsnetz (TKN) zugeordnet oder in ihm enthalten ist, wobei in dem Servicebereich der E-Mail-Service (EMS), der Voice-Mail-Service (VMS), der Konverter (KON) sowie eine Steuerlogik (STL) enthalten sind, welche zur Steuerung und Konfigurierung von Voice-Mail-Service, Konverter und E-Mail-Service eingerichtet ist.
